# EUROPÄISCHE PATENTSCHRIFT

(11) **EP 0 804 361 B1**
(45) Veröffentlichungstag und Bekanntmachung des Hinweises auf die Patenterteilung: **07.04.1999**
(21) Anmeldenummer: 96934292.2
(22) Anmeldetag: 28.10.1996
(51) Int. Cl.: B64B 1/40

(54) **BALLONKORB**
BALLOON BASKET
NACELLE DE BALLON

(30) Priorität: 15.11.1995 CH 3237/95
(43) Veröffentlichungstag der Anmeldung: 05.11.1997
(73) Patentinhaber: Prospective Concepts AG, 8702 Zollikon (CH)
(72) Erfinder: REINHARD, Andreas, CH-8702 Zollikon (CH)
(74) Vertreter: Salgo, Reinhold Caspar, Dr.
(86) Internationale Anmeldenummer: CH9600380
(87) Internationale Veröffentlichungsnummer: WO9718126

(56) Entgegenhaltungen:
- DE-C- 76 576
- US-A- 1 538 974
- US-A- 4 619 422

## Beschreibung

Die vorliegende Erfindung bezieht sich auf einen Ballonkorb nach dem Oberbegriff des Patentanspruches 1.
Ballonkörbe, insbesondere solche für Heissluftballone, sind verbreitet in Gebrauch; sie bestehen in der Regel aus einem Geflecht aus Weidenruten oder Natur- bzw. Kunstmaterialien mit ähnlichen Eigenschaften.
Solche bekannten Körbe sind verhältnismässig schwer und bieten bei harten Landungen praktisch keinen Aufprallschutz für Pilot und Passagiere. Zudem sind sie sehr winddurchlässig, was sich beim Auf- oder Absteigen in grösseren Höhen als kalter Durchzug lästig bemerkbar macht. Ein weiterer Nachteil liegt im grossen Volumen eines solchen Korbes, das für den Strassentransport eines Heissluftballons - oder nur schon des Korbes - zwingend nach einem Fahrzeug-Anhänger ruft.
Die Aufgabe, die mit der vorliegenden Erfindung gelöst werden soll, liegt in der Schaffung eines Korbes insbesondere für Heissluftballone, der die genannten Nachteile überwindet, also leicht ist, guten Aufprallschutz im Falle einer harten Landung bietet, winddicht ist und beim Strassentransport nur ein kleines Volumen aufweist.
Die Lösung der gestellten Aufgabe ist wiedergegeben im kennzeichnenden Teil des Patentanspruches 1 hinsichtlich ihrer wesentlichen Merkmale, in jenen der Patentansprüche 2 bis 13 hinsichtlich weiterer vorteilhafter Ausbildungen.
Anhand der beigefügten Zeichnung wird der Erfindungsgegenstand näher erläutert. Es zeigen
- Fig. 1: Ein erstes Ausführungsbeispiel eines Ballonkorbes in einer Schrägansicht, teilweise aufgeschnitten.
- Fig. 2: Ein zweites Ausführungsbeispiel eines Ballonkorbes im Querschnitt.
- Fig. 3: Eine Teilansicht eines erfindungsgemässen Ballonkorbes.
- Fig. 4: Ein Detail einer vorteilhaften Ausbildung im Querschnitt.

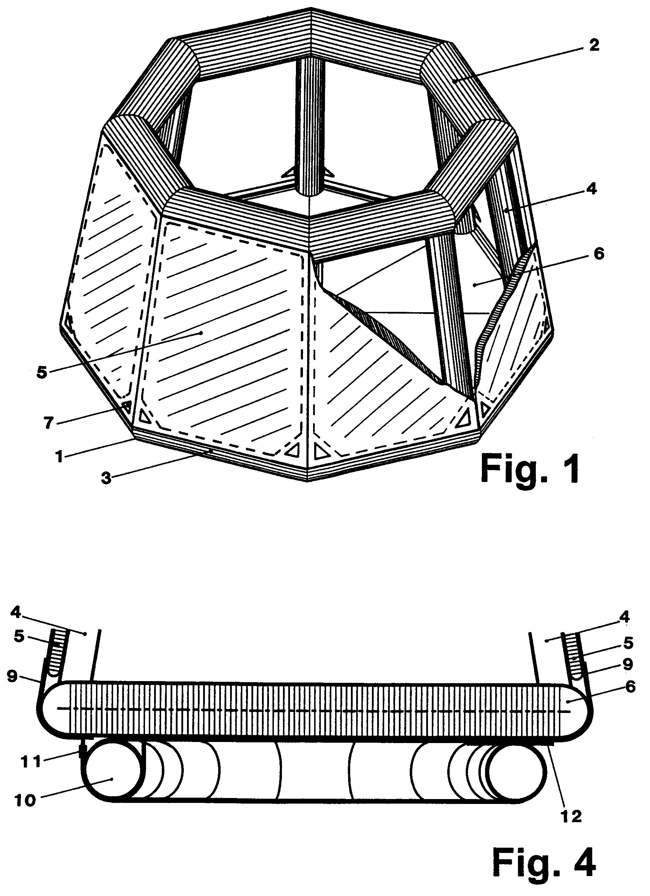

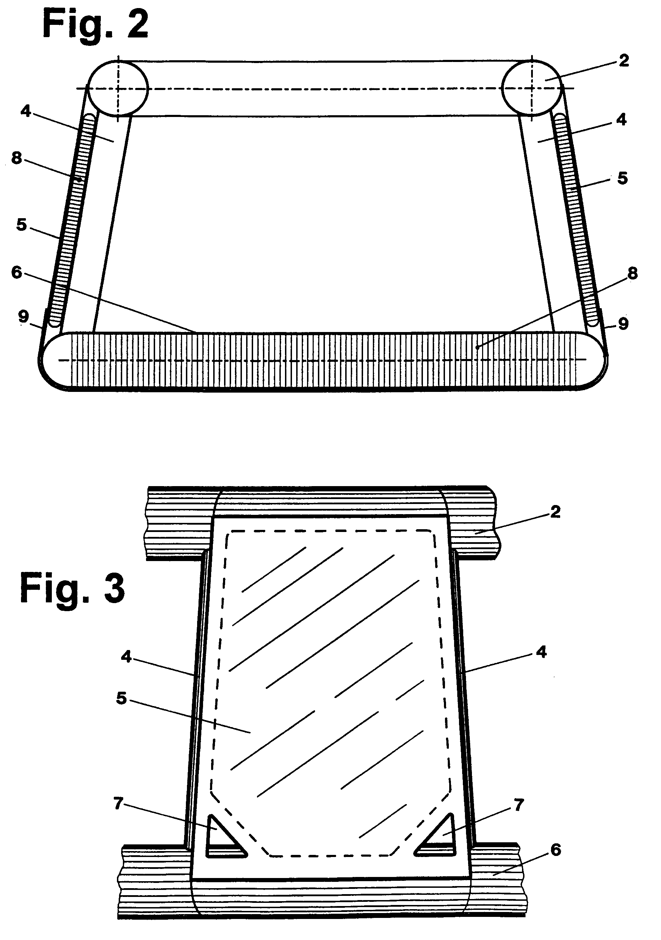

Fig. 1 zeigt ein Ausführungsbeispiel eines erfindungsgemässen Ballonkorbes 1 in einer Schrägansicht. Der Ballonkorb 1 ist aufgebaut aus einem oberen - hier achteckig ausgeführten - Ring 2, einem unteren Ring 3 - ebenfalls im Sinne eines Beispiels achteckig ausgebildet - und acht Streben 4.
Oberer Ring 2, unterer Ring 3 und Streben 4 sind rohrförmige pneumatische Strukturen, bestehend aus einem gewebearmierten Elastomer. Für den Strassentransport, also im nichtoperativen Zustand, sind die pneumatischen Strukturen 2, 3, 4 leer; für die Ballonfahrt, also im operativen Zustand, werden sie mit Druckluft gefüllt. Zwischen oberem Ring 2, unterem Ring 3 und jeweils zwei Streben 4 ist der Korb 1 mit - in diesem Ausführungsbeispiel - acht Seitenwandelementen 5 versehen. Zwei dieser Seitenwandelemente 5 sind aufgeschnitten dargestellt und geben den Blick frei auf den mit der Ziffer 6 bezeichneten Boden des Korbes 1. Die innere Struktur der Seitenwandelemente 5 und des Bodens 6, beide doppelwandig, werden anhand von Fig. 2 näher erläutert.
Jedes der Seitenwandelemente 5 weist in den unteren beiden Ecken zwei Löcher 7 auf, die dafür sorgen, dass der Korb 1 zugfrei durchlüftet ist und sich keine Gasansammlungen bilden können, die von den mitgeführten Gasflaschen stammen. Auf die Darstellung von Laschen, Oesen und dergleichen Befestigungselementen, wie sie zum Betrieb eines Ballonkorbes gehören, wurde hier verzichtet, einerseits weil sie nicht erfindungswesentlich sind, anderseits weil deren Anbringung an elastomeren pneumatischen Strukturen durchaus Stand der Technik ist.
Anstatt achteckig zu sein, kann der erfindungsgemässe Ballonkorb 1 auch vier- oder sechseckig sein oder eine beliebige andere polygonale Struktur aufweisen. Technisch gesehen ist selbstverständlich auch eine kreisrunde Form möglich, ist hingegen mit Hinsicht auf eine streifende Landung eher nachteilig, da der Korb hierbei in eine Rotationsbewegung um seine Hochachse geraten kann. Ebenfalls erfindungsgemäss ist ein kreisrunder oder ovaler Grundriss der Ringe 2, 3, wobei die Auswahl der Streben zweckmässigerweise vier nicht unterschreiten soll.
Fig. 2 zeigt einen Querschnitt durch einen viereckigen Ballonkorb 1. Sowohl im Boden 6, als auch in den Seitenwandelementen 5 sind Fäden 8 dargestellt, die die beiden Wandungen der mit 5 und 6 bezeichneten Elemente jeweils verbinden: Seitenwandelemente 5 und Boden 6 sind aus sog. Distanzgeweben hergestellt, deren beide Matrizen als Armierungsgewebe für Elastomere dienen. An den Rändern sind Seitenwandelemente 5 und Boden 6 durch ebenfalls gewebearmierte Elastomere abgeschlossen. Ringe 2, 3, Streben 4, Seitenwandelemente 5 und Boden 6 sind alle als pneumatische Strukturen ausgebildet, im operativen Zustand also mit Druckluft beaufschlagt, im inoperativen leer. Die mit 4, 5, 6 bezeichneten Elemente weisen jedes für sich ein Ventil auf; die Ringe 2, 3 sind aus Sicherheitsüberlegungen je in mehrere Abschnitte unterteilt, die je ein eigenes Ventil aufweisen. Zum Aufpumpen, d.h. Erstellen des operativen Zustandes, sind die genannten, nicht dargestellten, Ventile zweckmässigerweise durch eine Ringleitung verbunden, um das Aufpumpen zu beschleunigen. Zum Entleeren weist jedes der genannten Elemente beispielsweise ein weiteres Ventil mit grossem Oeffnungsquerschnitt auf, um ebenfalls das Entleeren zu beschleunigen.
Im Ausführungsbeispiel gemäss Fig. 2 ist der untere Ring 3 in den Boden 6 integriert und besteht folglich aus den armierten elastomeren seitlichen Abschlüssen des Bodens 6; damit entfällt auch die eigene Ausrüstung des im Boden 6 integrierten unteren Ringes 3 mit Ventilen. Verbunden sind die Ringe 2, 3, die Streben 4, die Seitenwandelemente 5 und der Boden 6 dort, wo sie aneinander grenzen, durch gewebearmierte elastomere Lappen 9; dargestellt sind in Fig. 2 nur jene, die die Seitenwandelemente 5 mit dem Boden 6 verbinden. Fig. 3 zeigt eines der Seitenwandelemente 5 im Aufriss. Schraffiert dargestellt ist der doppelwandige Teil, der neben den Streben 4 einen Teil der Stabilisierungsfunktion übernimmt. Wegen der Doppelwandigkeit kann das Seitenwandelement 5 nicht nur Zugsondern auch Druck- und Scherkräfte aufnehmen. Im Bereich der Löcher 7 ist das Seitenwandelement 5 nur einwandig. Die Verbindungen der pneumatischen Elemente 2 bis 6 und der genannten Lappen 9 geschieht durch Kleben oder Schweissen.
In Fig. 4 ist der Bereich des Bodens 6 des Ausführungsbeispiels nach Fig. 2 für sich dargestellt. Mit dem Boden 6 lösbar verbunden ist ein weiteres pneumatisches Element, hier beispielsweise ein im wesentlichen ringförmiger Schlauch 10, der ebenfalls, wie die übrigen pneumatischen Elemente 2, 3, 4, 5, 6 unter Druck gesetzt werden kann und ebenso aus gewebearmiertem Elastomer hergestellt ist. Dem Zwecke des Schlauches 10 entsprechend wird dieser Druck jedoch ein geringerer sein, als in den anderen genannten pneumatischen Elementen.
Der Schlauch 10 ist mit dem Boden 6 beispielsweise durch mehrere ihn umgreifende Riemen 11 - wie links in Fig. 4 dargestellt - oder an seiner ganzen Auflagefläche durch einen Klettverschluss 12 verbunden, wie rechts in Fig. 4 gezeigt.
Die Aufgabe des Schlauches 10 ist es, im Falle einer harten oder einer Schleiflandung einerseits den Passagieren des Ballonkorbes 1, anderseits dem Ballonkorb 1 selbst erhöhten Schutz vor den Folgen solcher Landungen zu bieten. Seinem Einsatz gemäss ist der Schlauch 10 als Verschleiss-Objekt gedacht und deshalb mit dem Ballonkorb 1 in lösbarer Verbindung. Neben dieser genannten Aufgabe erteilt der Schlauch 10 dem Ballonkorb 1 auch zusätzlichen Auftrieb im Falle einer unvermeidlichen Wasserung.
Anstelle eines ringförmigen Schlauches 10 sind auch andere Formen denkbar und im Sinne der Erfindung.

## Patentansprüche

1. Korb für Heissluftballone dadurch gekennzeichnet, dass
- er besteht aus mit Druckluft beaufschlagbaren pneumatischen Elementen, nämlich einen oberen Ring (2), einen unteren Ring (3), einer Vielzahl von Streben (4), die im wesentlichen vertikal vom unteren Ring (3) zum oberen Ring (2) sich erstrecken, einer der Anzahl der Streben (4) entsprechenden Zahl von Seitenwandelementen (5) und einem Boden (6),
- die beiden Ringe (2, 3) und die Streben (4) bestehen aus schlauchartigen Hohlkörpern, deren Wandung aus gewebearmiertem Elastomer gefertigt sind,
- die Seitenwandelemente (5) und der Boden (6) doppelwandig sind und bestehen aus Distanzgeweben, deren beide Matrizen durch Fäden verbunden sind und gleichzeitig die Armierung für den sie abdichtenden Elastomer abgeben,
- die Seitenwandelemente (5) und der Boden (6) eine luftdichte Berandung aus ebenfalls gewebearmiertem Elastomer aufweisen, wodurch die Seitenwandelemente (5) und der Boden (6) luftdichte pneumatische Elemente sind,
- jedes der genannten pneumatischen Elemente (2, 3, 4, 5, 6) mindestens ein Ventil aufweist, welches zur Beaufschlagung mit Druckluft und ebenfalls zum Entleeren dient,
- die Seitenwandelemente (5) oben mit dem oberen Ring (2), seitlich mit je einer Strebe (4) und unten mit dem unteren Ring (3) verbunden sind.

2. Korb für Heissluftballone nach Patentanspruch 1, dadurch gekennzeichnet, dass der untere Ring (3) gebildet ist aus dem seitlichen Abschluss des Bodens (6) und dadurch kein selbständiges pneumatisches Element bildet.

3. Korb für Heissluftballone nach Patentanspruch 1 oder 2, dadurch gekennzeichnet, dass mindestens vier Streben (4) vorhanden sind.

4. Korb für Heissluftballone nach Patentanspruch 1 oder 2, dadurch gekennzeichnet, dass die Ringe (2, 3), die Streben (4) und die Seitenwandelemente (5) durch gewebearmierte elastomere Lappen (9) verbunden sind, und die genannten Elemente (2, 3, 4, 5) mit den Lappen durch Kleben verbunden sind.

5. Korb für Heissluftballone nach Patentanspruch 1 oder 2, dadurch gekennzeichnet, dass die Ringe (2, 3), die Streben (4) und die Seitenwandelemente (5) durch gewebearmierte elastomere Lappen (9) verbunden sind, und die genannten Elemente (2, 3, 4, 5) mit den Lappen durch Schweissen verbunden sind.

6. Korb für Heissluftballone nach Patentanspruch 1 oder 2, dadurch gekennzeichnet, dass die Ringe (2, 3), die die Streben (4) und Seitenwandelemente (5), die die Gesamtheit der pneumatischen Elemente bilden, je ein Ventil zum Aufpumpen und eines zum Entleeren aufweisen.

7. Korb für Heissluftballone nach Patentanspruch 6, dadurch gekennzeichnet, dass die zum Aufblasen geeigneten Ventile durch eine Ringleitung miteinander verbunden sind.

8. Korb für Heissluftballone nach Patentanspruch 1 oder 2, dadurch gekennzeichnet, dass ein weiteres pneumatisches Element (10) vorhanden ist, welches durch eine lösbare Verbindung unter dem Boden (6) des Korbes (1) angebracht ist.

9. Korb für Heissluftballone nach Patentanspruch 8, dadurch gekennzeichnet, dass das weitere pneumatische Element ein im wesentlichen ringförmiger Schlauch (10) ist.

10. Korb für Heissluftballone nach Patentanspruch 8, dadurch gekennzeichnet, dass die lösbare Verbindung aus Riemen (11) besteht.

11. Korb für Heissluftballone nach Patentanspruch 8, dadurch gekennzeichnet, dass die lösbare Verbindung aus einem Klettverschluss (12) besteht.

12. Korb für Heissluftballone nach Patentanspruch 1 oder 2, dadurch gekennzeichnet, dass jedes der Seitenwandelemente (5) an seinem an den unteren Ring (3) angrenzenden Rand mindestens ein von der Innenseite zur Aussenseite des Korbes (1) führendes Loch (7) aufweist, womit Gasansammlungen im Korb (1) vermieden werden können.

13. Korb für Heissluftballone nach Patentanspruch 1, dadurch gekennzeichnet, dass die beiden Ringe (2, 3) in mehrere voneinander pneumatisch getrennte Abschnitte unterteilt sind.

## Claims

1. A basket for hot air balloons, characterised in that
- it comprises pneumatic elements, which can be inflated with compressed air, namely an upper ring (2), a lower ring (3), a plurality of struts (4), which essentially extend vertically from the lower ring (3) to the upper ring (2), a number of side wall elements (5), corresponding to the number of struts (4) and a floor (6),
- the two rings (2, 3) and the struts (4) comprise tube-like hollow bodies, whose walls are manufactured from reinforced elastomer,
- the side wall elements (5) and the floor (6) are double walled and comprise distance fabrics, whose two matrices are joined by threads and simultaneously provide the reinforcement for the sealing elastomer,
- the side wall elements (5) and the floor (6) have an airtight edging of similarly reinforced elastomer, whereby the side wall elements (5) and the floor (6) are airtight pneumatic elements,
- each of the pneumatic elements quoted (2, 3, 4, 5, 6) has at least one valve, which serves for the inflation with compressed air and similarly for deflation,
- the side wall elements (5) are joined to the upper ring (2), to the side in each case to a strut (4) and below to the lower ring (3).

2. A basket for hot air balloons according to Claim 1, characterised in that the lower ring (3) is formed from the edge sealing of the floor (6) and therefore does not constitute an individual pneumatic element.

3. A basket for hot air balloons according to Claim 1 or Claim 2, characterised in that at least four struts (4) are present.

4. A basket for hot air balloons according to Claim 1 or Claim 2, characterised in that the rings (2, 3), the struts (4) and the side wall elements (5) are joined by means of fabric reinforced elastomer cloths (9), and the quoted elements (2, 3, 4, 5) are joined using the cloths (9) by glueing.

5. A basket for hot air balloons according to Claim 1 or Claim 2, characterised in that the rings (2, 3), the struts (4) and the side wall elements (5) are joined by means of fabric reinforced elastomer cloths (9), and the quoted elements (2, 3, 4, 5) are joined using the cloths (9) by welding.

6. A basket for hot air balloons according to Claim 1 or Claim 2, characterised in that the rings (2, 3), the struts (4) and the side wall elements (5), which form the entirety of the pneumatic elements, each has a valve for pumping up and one for deflation.

7. A basket for hot air balloons according to Claim 6, characterised in that the valves for inflation are connected together by a ring feeder line.

8. A basket for hot air balloons according to Claim 1 or Claim 2, characterised in that a further pneumatic element (10) is present, which is attached by a detachable connection below the floor (6) of the basket (1).

9. A basket for hot air balloons according to Claim 8, characterised in that the further pneumatic element is essentially an annular tube (10).

10. A basket for hot air balloons according to Claim 8, characterised in that the detachable binding comprises straps (11).

11. A basket for hot air balloons according to Claim 8, characterised in that the detachable binding comprises a gripping strip (12).

12. A basket for hot air balloons according to Claim 1 or Claim 2, characterised in that each of the side wall elements (5) at its edge bordering the lower ring (3) has at least one hole (7) leading from the inner side to the outer side of the basket (1), whereby accumulations of gas in the basket (1) can be avoided.

13. A basket for hot air balloons according to Claim 1, characterised in that the two rings (2, 3) are divided into several sections which are pneumatically separated from each other.

## Revendications

1. Nacelle pour montgolfières, caractérisée
- en ce qu'elle se compose d'éléments pneumatiques aptes à être alimentés en air comprimé, à savoir un anneau supérieur (2), un anneau inférieur (3), plusieurs montants (4) qui s'étendent globalement à la verticale entre l'anneau inférieur (3) et l'anneau supérieur (2), un nombre d'éléments formant parois latérales (5) correspondant au nombre de montants (4), et un fond (6),
- en ce que les deux anneaux (2, 3) et les montants (4) se composent de corps creux en forme de tuyaux dont la paroi est fabriquée en élastomère à armature en tissu,
- en ce que les éléments formant parois latérales (5) et le fond (6) ont une double paroi et se composent de tissus d'écartement dont les deux matrices sont reliées par des fils et forment en même temps l'armature pour l'élastomère qui les rend étanches,
- en ce que les éléments formant parois latérales (5) et le fond (6) comportent un bord étanche à l'air en élastomère également à armature en tissu, moyennant quoi les éléments formant parois latérales (5) et le fond (6) sont des éléments pneumatiques étanches à l'air,
- en ce que chacun desdits éléments pneumatiques (2, 3, 4, 5, 6) comporte au moins une soupape qui sert à l'alimentation en air comprimé et à l'évacuation de celui-ci,
- et en ce que les éléments formant parois latérales (5) sont reliés en haut à l'anneau supérieur (2), sur chaque côté à un montant (4) et en bas à l'anneau inférieur (3).

2. Nacelle pour montgolfières selon la revendication 1, caractérisée en ce que l'anneau inférieur (3) est formé par la bordure latérale du fond (6) et ne constitue donc pas un élément pneumatique indépendant.

3. Nacelle pour montgolfières selon la revendication 1 ou 2, caractérisée en ce qu'il est prévu au moins quatre montants (4).

4. Nacelle pour montgolfières selon la revendication 1 ou 2, caractérisée en ce que les anneaux (2, 3), les montants (4) et les éléments formant parois latérales (5) sont reliés par des pattes (9) en élastomère à armature en tissu, et lesdits éléments (2, 3, 4, 5) sont reliés aux pattes par collage.

5. Nacelle pour montgolfières selon la revendication 1 ou 2, caractérisée en ce que les anneaux (2, 3), les montants (4) et les éléments formant parois latérales (5) sont reliés par des pattes (9) en élastomère à armature en tissu, et lesdits éléments (2, 3, 4, 5) sont reliés aux pattes par soudage.

6. Nacelle pour montgolfières selon la revendication 1 ou 2, caractérisée en ce que les anneaux (2, 3), les montants (4) et les éléments formant parois latérales (5) qui forment l'ensemble des éléments pneumatiques comportent chacun une soupape pour le gonflage et une pour le dégonflage.

7. Nacelle pour montgolfières selon la revendication 6, caractérisée en ce que les soupapes appropriées pour le gonflage sont reliées entre elles par une conduite annulaire.

8. Nacelle pour montgolfières selon la revendication 1 ou 2, caractérisée en ce qu'il est prévu un élément pneumatique supplémentaire (10) qui est placé sous le fond (6) de la nacelle (1) à l'aide d'une liaison amovible.

9. Nacelle pour montgolfières selon la revendication 8, caractérisée en ce que l'élément pneumatique supplémentaire est un tuyau globalement annulaire (10).

10. Nacelle pour montgolfières selon la revendication 8, caractérisée en ce que la liaison amovible se compose de courroies (11).

11. Nacelle pour montgolfières selon la revendication 8, caractérisée en ce que la liaison amovible se compose d'une fermeture autoagrippante (12).

12. Nacelle pour montgolfières selon la revendication 1 ou 2, caractérisée en ce que chacun des éléments formant parois latérales (5) présente sur son bord voisin de l'anneau inférieur (3) au moins un trou (7) qui va du côté intérieur au côté extérieur de la nacelle (1), ce qui permet d'éviter des accumulations de gaz dans la nacelle (1).

13. Nacelle pour montgolfières selon la revendication 1, caractérisée en ce que les deux anneaux (2, 3) sont divisés en plusieurs sections séparées les unes des autres, d'un point de vue pneumatique.
